**Europäisches Patentamt**

**European Patent Office**

**Office européen des brevets**

(19)

(11) Publication number : **0 394 824 B1**

## (12) EUROPEAN PATENT SPECIFICATION

(45) Date of publication of patent specification :
05.08.92 Bulletin 92/32

(51) Int. Cl.⁵ : **G01P 1/02**

(21) Application number : **90107354.4**

(22) Date of filing : **18.04.90**

(54) Inductive sensor with variable reluctance.

(30) Priority : **18.04.89 FR 8905109**

(43) Date of publication of application :
**31.10.90 Bulletin 90/44**

(45) Publication of the grant of the patent :
**05.08.92 Bulletin 92/32**

(84) Designated Contracting States :
**DE FR GB IT SE**

(56) References cited :
**EP-A- 0 149 217**
**EP-A- 0 247 610**
**EP-A- 0 278 806**
**DE-A- 3 413 627**

(73) Proprietor : **SIEMENS AKTIENGESELLSCHAFT**
**Wittelsbacherplatz 2**
**W-8000 München 2 (DE)**

(72) Inventor : **Begout, Marc Guy Jean**
**23 rue des Frères Lion**
**F-31000 Toulouse (FR)**

EP 0 394 824 B1

## Description

The present invention relates to an inductive sensor with variable reluctance and, more particularly, to such a sensor with an improved seal.

Sensors of this type are currently used in motor vehicles in order to measure the speed of rotation of the wheels of the vehicle or of the output shaft of the engine of the vehicle, for example. The signals generated by the sensors are used by computers controlling ignition and/or injection devices forming part of an internal combustion engine driving the vehicle, or a wheel-anti-skid device for example. These sensors are therefore placed in a very aggressive environment and must be carefully protected, particularly against splashes of oil, mud, water and salt, and from dust.

To this end, the electrical and/or magnetic components of the sensor are currently placed in a cup, this cup then being closed by moulding on a plastic material, such as a synthetic resin,which embeds the parts of the sensor which are not protected by the cup. A description is given in European Patent Application No. 278,806 of a "single-pole" sensor of this type, which comprises a permanent magnet and a single polar part placed end to end and placed in a housing inside a frame supporting an electrical winding, the whole being placed in a sealed, protective cup. The ends of the electrical winding are connected to electrical wires which emerge from the sensor in order to supply a device which uses the signals appearing at the terminals of the winding. Such a sensor is fixed so that the end of the polar part is placed opposite the periphery of a toothed disc which rotates with the shaft whose speed of rotation it is desired to measure. By passing in front of the polar part, the teeth cause the reluctance of a magnetic circuit passing through the winding of the sensor and which is completed the toothed disc to vary, this variation in reluctance causing the appearance at the terminals of this winding of a virtually sinusoidal signal with a period which is proportional to the speed of rotation of the disc and to the number of teeth formed on its periphery.

So-called "two-pole" inductive sensors are also known, which are distinguished from "single-pole" sensors of the type described above in that they comprise, inside the winding, a permanent magnet with a magnetic axis which is perpendicular to that of the winding and two polar parts coupled to the magnet on either side of the latter. The polar parts can be separated from one another as a function of the pitch of the teeth of the disc so as to maximize the amplitude of the signal supplied by the winding. A description of such a sensor is given in European Patent No. 149,217. In this sensor, the electrical winding and the clips connecting the terminals of this winding to an outer electrical cable are enclosed in a cavity closed, on the one hand, by means of a flange of a frame which carries the coil and, on the other hand, by means of a cover which closes the end of the cavity which is not closed by the flange of the coil holder. The flange and the cover are both welded using ultrasound.

The seal of the cavity protecting the winding and the connection clips thus depends on the quality of the welds achieved by ultrasound on the two ends of this cavity.

The aim of the invention is to construct an inductive sensor with an improved seal and, in particular, relates to such a sensor in which the cavity protecting the winding and the clips for connecting this winding to an outer cable comprises only one opening which can be closed in a single operation.

A further aim of the present invention is to construct such a sensor with a reduced manufacturing cost and which, nevertheless, has improved reliability.

These aims of the invention are achieved with an inductive sensor of the type comprising a permanent magnet coupled to at least one polar part, an electrical winding at least partially enclosing the permanent magnet/polar part assembly, means for connecting the terminals of the winding to an outer circuit using electrical signals appearing between these terminals and means for protecting the electrical components of the sensor. According to the invention, these protection means comprise a cup having coaxial inner and outer cylindrical walls, said walls delimiting an annular cylindrical chamber receiving the electrical winding, said chamber being closed sealingly at a first end of the cup by an annular wall made integral with both cylindrical walls, the inner cylindrical wall further delimiting a central cylindrical chamber surrounded by the annular chamber for receiving the permanent magnet and the polar part, this central chamber being closed sealingly at the second end of the cup by a wall made integral with the inner cylindrical wall.

This second end of the cup preferably carries, on the outer wall of the annular chamber, at least one continuous radial rib running over the entire circumference of the end of the cup, this radial rib being moulded on with a sealing and mechanical-protection material embedding the portion of the sensor which projects beyond the cup up to an end of an electrical cable forming part of the connection means.

According to the present invention, the electrical winding of the sensor and its means for connection to the outer cable are thus hermetically enclosed and protected in a cavity of the sensor by means of a single operation of moulding an at one end of this cavity.

According to another advantageous characteristic of the sensor according to the invention, the cross-section of the central chamber is shaped so as to complement that of the magnet/polar part assembly in order to ensure and maintain a predetermined orien-

tation of this assembly relative to the axis of this chamber.

According to yet a further advantageous characteristic of the sensor according to the invention, the cup is constructed by moulding on the magnet/polar part assembly around at least a portion of this assembly.

Other characteristics and advantages of the sensor according to the invention will become apparent on reading the following description and on examining the appended drawing, in which:

Figure 1 is a sectional view of the sensor according to the invention, taken on the sectional line A in Figure 2,

Figure 2 is a sectional view of the sensor according to the invention, taken on the sectional line B in Figure 1, and

Figure 3 is a view in partial and enlarged section of a portion of the sensor according to the invention, taken on the sectional line C in Figure 1.

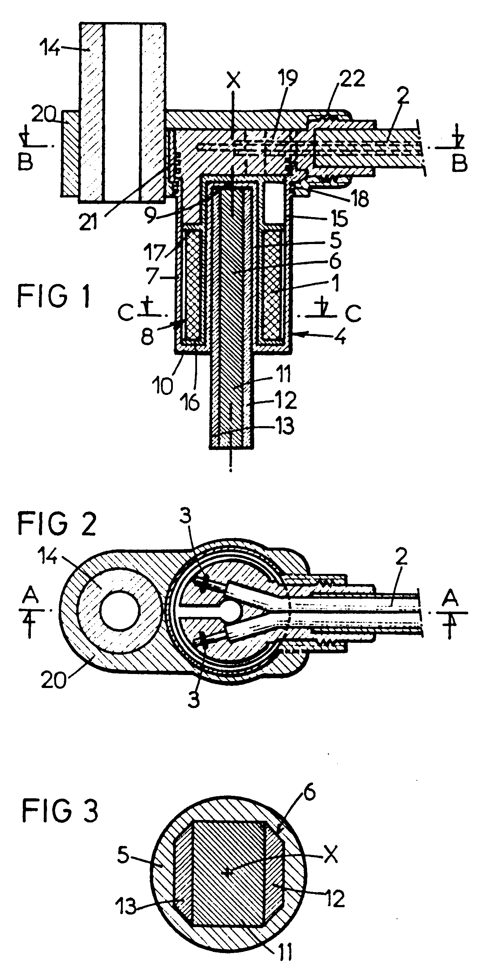

Reference is made to Figure 1 of the appended drawing in which the sensor according to the invention is shown in section in a plane passing through the axis of an electrical winding 1 and through the output axis of an electrical cable 2 connected to the ends of the winding 1 by means of clips 3 which are partially shown in Figure 2.

According to the present invention, the sensor comprises a protective cup 4 in the form of a partially turned-back glove finger. The cup 4 essentially comprises an inner cylindrical wall 5 delimiting an inner chamber 6, an outer cylindrical wall 7 which is coaxial to the wall 5 and encloses the latter so that an annular chamber 8 which receives the electrical winding 1 is delimited between the two walls. The central chamber 6 is closed, at one end of the cup, by a circular wall 9, whilst the annular chamber 8 is closed at the other end of the cup by an annular wall 10.

The sensor shown is of the two-pole type and thus comprises a permanent magnet 11 of elongated shape, whose magnetic axis is perpendicular to the axis X of the cup, as is well known in the art. Polar parts 12 and 13 of identical length lie flat on the two poles of this magnet. As shown in the partial section in Figure 3 taken on the sectional line C in Figure 1, the assembly formed by the magnet 11 and the polar parts 12 and 13 has a section which complements that of the chamber 6 delimited by the cylindrical wall 5.

According to an advantageous arrangement of the sensor according to the invention, this section is shaped so as to define a predetermined orientation of the magnet and of the polar parts without the possibility of rotation about the axis X of the chamber 6. In this figure, it appears that sections of the polar parts 12 and 13 have the shape of an isosceles trapezium, whereas the section of the magnet 11 has a rectangular shape. Clearly, these pieces, which are housed in a chamber of complementary shape, cannot rotate about the axis X of the chamber 6. Other sectional shapes could, of course, be adopted in order to achieve this result.

As is well known, such a sensor is designed in order to interact with a disc with a toothed periphery which is integral in rotation with a shaft whose speed it is desired to measure. The sensor comprises a sleeve 14 in which a fixing means, such as a bolt, for example, can pass in order to fix the sensor in a precisely adjusted position which is suitable for disposing the outer end of the assembly 11, 12, 13 formed by the magnet and the polar parts opposite the periphery of the toothed disc. The magnetic axis of the magnet 11 must then be disposed parallel to the plane of the disc. For this reason it is important to fix the position of this axis precisely relative to the sensor. The passing of the teeth of the disc opposite the end of the magnet and of the polar parts causes the reluctance of a magnetic circuit passing through the winding of the sensor to vary, as is well known. This variation in reluctance thus corresponds to a variation in flux which induces in the coil a difference in potential which is available at the terminals of the winding and transmitted via the cable 2 to a use device. The electrical signal used by this device generally has a virtually sinusoidal shape and the frequency of this signal is a function of the speed of rotation of the shaft being monitored. As has been seen above, the spacing of the polar parts 12 and 13 can be adjusted in order to maximize the amplitude of the signal as a function of the pitch of the teeth of the disc.

In Figure 1 of the appended drawing, it appears that the winding 1 consists of contiguous turns of an electrical wire wrapped around a generally cylindrical frame 15. This frame has flanges 16 and 17 with an outer diameter which complements that of the annular chamber 8, these flanges serving to retain the turns of the wrapping of the winding. The frame is of a size such that it can be slid, after having been fitted with the winding 1, into the annular chamber 8 via the open end of the latter. In this position, according to the invention, the frame 15 sealingly blocks the opening of this annular chamber in order to ensure the protection of the winding 1 contained in the annular chamber.

According to a first embodiment of the invention (not shown), this seal is obtained with the aid of an O-ring suitably disposed in a groove between the inner face of the cylindrical wall 7 and the head of the frame.

According to a second embodiment shown in Figure 1, the cable 2 is firstly connected electrically to the winding 1 and a head 19 is moulded on the frame 15 so as to embed the electrical connection while forming annular fluting 21 with a diameter adjusted to the diameter of the inner face of the wall 7 of the cup 4 on which the fluting bears once the sensor has been assembled, as will be seen below. Ribs 22 are also formed around the end of the cable for sealing purposes which will be explained below.

Also worthy of note, on the cup of the sensor according to the invention, are circular radial ribs 18 which project beyond the outer surface of this cup. These ribs play an important role in the seal of the sensor according to the invention, as is explained below in connection with the description of a method for manufacturing the sensor according to the invention.

According to an advantageous characteristic of this manufacturing method, the cup 4 is formed directly on the assembly consisting of the permanent magnet 11 and its polar parts 12 and 13, assembled as shown in Figure 1, by moulding on this assembly. After constructing electrical connections between the cable 2 and the winding 1 and moulding on the head 19 which is shaped as indicated above, the assembly thus formed is inserted in the cup 4 so that the head 19 blocks the annular opening of the chamber 8. The fluting 21 thus bears on the inner face of the wall 7 of the cup, ensuring the seal of the joint thus formed, so as to protect the winding 1 against any infiltration of water, dust, mud, etc.

The sleeve 14 and the cup 4 fitted with the frame and with the winding are then placed in a mould and all the parts of the sensor which project beyond the cup 4 are moulded on with the aid of a suitable plastic material, such as a synthetic resin. The volume 20 thus moulded on encloses the ribs 18 and the ribs 22 (see Figure 1) so that these ribs are embedded in the moulding material, thus ensuring the seal of the sensor by virtue of the effect of zigzags made by these ribs. The moulding material also embeds the frame head 19. A good seal is ensured between the two moulded-on parts by making a suitable choice of the materials used for each of them in order to ensure satisfactory adherence of one to the other. The moulding material of the volume 20 also surrounds, in a predetermined position, the sleeve 14 which serves to fix the sensor in a predetermined relative position relative to a toothed wheel which is integral with the shaft whose speed of rotation it is desired to measure.

It thus appears that the winding 1 and the electrical connections of the sensor according to the invention are perfectly protected against the various attacks they may encounter in an automobile environment: splashes of mud, oil, water, salt, dusts and other solid particles, etc. In fact, the winding 1 is completely enclosed in the annular chamber 8 whose only opening is sealed by the synthetic resin moulded on the ribs 18 and 22, whereas the electrical connections are themselves embedded in a suitable moulding material. These advantages are obtained by virtue of the fluting and ribs described above and by virtue of the original turned-back glove-finger shape of the cup according to the invention, which makes it possible to make only a single opening in the cup 4, thus dispensing with all welds using ultrasound which can give rise to leakage, assuming that these welds are imperfectly executed.

The invention is, of course, not limited to the embodiment described and shown, which has been given only by way of example. The invention could thus be implemented without difficulty in a single-pole sensor of the type described in the abovementioned European Patent Application No. 278,806, in which a permanent magnet and a polar part are placed end to end in a central chamber formed in the frame carrying the winding. Similarly, the present invention can be applied to a sensor of the type described in Patent Application DE 34 13 627, which comprises only a single polar part coupled longitudinally to the permanent magnet 11.

## Claims

1. Inductive sensor of the type comprising a permanent magnet (11) coupled to at least one polar part (12,13) and electrical winding (1) at least partially enclosing the permanent magnet/ polar part assembly, means (3) for connecting the terminals of the winding to an outer circuit using electrical signals appearing between these terminals and means for protecting the electrical components of the sensor, characterized in that the protection means comprise a cup (4) having coaxial inner (5) and outer (7) cylindrical walls, said walls delimiting an annular cylindrical chamber (8) receiving the electrical winding (1), said chamber being closed sealingly at a first end of the cup by an annular wall (10) made integral with both cylindrical walls, the inner cylindrical wall further delimiting a central cylindrical chamber (6) surrounded by the annular chamber (8) for receiving the permanent magnet (11) and the polar part (12, 13), this central chamber being closed sealingly at the second end of the cup by a circular wall (9) made integral with the inner cylindrical wall.

2. Sensor according to Claim 1, characterized in that the said second end of the cup carries, on the outer wall (7) of the annular chamber, at least one continuous radial rib (18) running right around the end of the cup, this radial rib being moulded on with a sealing and mechanical-protection material embedding the portion of the sensor with projects beyond the cup up to an end of an electrical cable (2) forming part of the connection means.

3. Sensor according to either of Claims 1 and 2, characterized in that the cross-section of the central chamber complements that of the magnet/polar part assembly so as to define a predetermined fixed orientation of this assembly relative to the axis of this chamber.

4. Sensor according to any one of Claims 1 to 3, characterized in that the cup (4) is constructed by moulding on the magnet/ polar part assembly around at least a portion of this assembly.

5. Sensor according to any one of the preceding claims, characterized in that the winding (1) is formed on a frame (15) which is shaped so that it can be slid into the annular chamber via an annular opening in the latter disposed at the blocked end of the central chamber.

6. Sensor according to any one of Claims 1 to 5, characterized in that the central chamber is open on the outside, the magnet/polar part assembly projecting beyond this central chamber.

7. Sensor according to any one of Claims 1 to 6, characterized in that the magnet (11) and the polar part (12, 13) are coupled end to end in the central chamber.

8. Sensor according to any one of Claims 1 to 6, characterized in that the magnet and the polar part are coupled longitudinally in the central chamber.

9. Sensor according to any one of Claims 1 to 6, characterized in that it comprises two parallel polar parts (12, 13) coupled longitudinally to a magnet (11) on either side of the latter.

10. Sensor according to any one of Claims 5 to 9, characterized in that the frame (15) carrying the winding comprises blocking means (19) which complement the section of the annular chamber in order to prevent a flow towards the winding (1) of the sealing material moulded on the portion of the sensor which projects beyond the cup.

11. Sensor according to Claim 10, characterized in that these blocking means comprise at least one O-ring inserted between the inner face of the outer wall (7) of the cup (4) and the frame (15).

12. Sensor according to Claim 10, characterized in that these blocking means comprise a head (19) moulded on the end of the cable (2) and on the connections of this cable to the winding 1).

13. Sensor according to Claim 12, characterized in that the head (19) comprises sealing fluting (21) which bears on the inner face of the outer wall (7) of the cup (4).

14. Sensor according to Claim 12 or 13, characterized in that it comprises a volume (20) of plastic material formed by moulding on the ribbed end (22) of the cable (2) of the head (19) and a sleeve (14) for fixing the sensor.

## Revendications

1. Capteur inductif du type comprenant un aimant permanent (11) couplé à au moins une pièce polaire (12, 13), et à un bobinage électrique (1) enveloppant au moins partiellement l'ensemble aimant permanent/pièce polaire, des moyens de connexion (3) des bornes du bobinage à un circuit extérieur d'exploitation des signaux électriques apparaissant entre ces bornes et des moyens de protection des organes électriques du capteur, caractérisé en ce que ces moyens de protection comprennent un godet (4) présentant des parois cylindriques interne (5) et externe (7) coaxials, ces parois définissant une chambre cylindrique annulaire (8) qui reçoit le bobinage électrique (1), cette chambre étant fermée de manière étanche à une première extrémité du godet par une paroi annulaire (10) formée d'une pièce avec les deux parois cylindriques, la paroi cylindrique interne délimitant en outre une chambre cylindrique centrale (6) entourée par la chambre annulaire (8) pour recevoir l'aimant permanent (11) et la pièce polaire (12, 13), cette chambre centrale étant fermée de manière étanche à la deuxième extrémité du godet par une paroi circulaire (9) formée d'une pièce avec la paroi cylindrique interne.

2. Capteur conforme à la revendication 1, caractérisé en ce que ladite seconde extrémité du godet porte, sur la paroi externe (7) de la chambre annulaire, au moins une nervure radiale (18) continue courant tout autour de l'extrémité du godet, cette nervure radiale étant surmoulée avec un matériau d'étanchéité et de protection mécanique noyant la partie du capteur qui déborde du godet, jusqu'au départ d'un câble électrique (2) formant partie des moyens de connexion.

3. Capteur conforme à l'une quelconque des revendications 1 et 2, caractérisé en ce que la section droite de la chambre centrale est complémentaire de celle de l'ensemble aimant/pièce polaire, de manière à définir une orientation fixe prédéterminée de cet ensemble par rapport à l'axe de cette chambre.

4. Capteur conforme à l'une quelconque des revendications 1 à 3, caractérisé en ce que le godet (4) est réalisé par surmoulage de l'ensemble aimant/pièce polaire, autour d'au moins une partie de cet ensemble.

5. Capteur conforme à l'une quelconque des revendications précédentes, caractérisé en ce que le bobinage (1) est formé sur une carcasse (15) conformée de manière à pouvoir être glissée dans la chambre annulaire par une ouverture annulaire de celle-ci disposée au niveau de l'extrémité obturée de la chambre centrale.

6. Capteur conforme à l'une quelconque des revendications 1 à 5, caractérisé en ce que la chambre centrale est ouverte sur l'extérieur, l'ensemble aimant/pièce polaire débordant de cette chambre centrale.

7. Capteur conforme à l'une quelconque des revendications 1 à 6, caractérisé en ce que l'aimant (11) et la pièce polaire (11, 12) sont accolés bout à bout dans la chambre centrale.

8. Capteur conforme à l'une quelconque des revendications 1 à 6, caractérisé en ce que l'aimant et la pièce polaire sont accolés longitudinalement dans la chambre centrale.

9. Capteur conforme à l'une quelconque des revendications 1 à 6, caractérisé en ce qu'il comprend deux pièces polaires parallèles (12, 13) accolées longitudinalement à un aimant (11), de part et d'autre de celui-ci.

10. Capteur conforme à l'une quelconque des revendications 5 à 9, caractérisé en ce que la carcasse (15) qui porte le bobinage comprend des moyens d'obturation (19) complémentaires de la section de la chambre annulaire pour empêcher un écoulement vers le bobinage (1) du matériau d'étanchéité surmoulé sur la partie du capteur qui déborde du godet.

11. Capteur conforme à la revendication 10, caractérisé en ce que ces aryens d'obturation comprennent au moins un Joint torique interposé entre la face interne de la paroi externe (7) du godet (4) et la carcasse (15).

12. Capteur conforme à la revendication 10, caractérisé en ce que ces aryens d'obturatiion comprennent une tête (19) surmoulée sur l'extrémité du câble (2) et sur les connexions de ce câble au bobinage (1).

13. Capteur conforme à la revendication 12, caractérisé en ce que la tête (19) comporte des godrons (21) d'étanchéité qui viennent en appui sur la face interne de la paroi externe (7) du godet (4).

14. Capteur conforme à la revendication 12 ou 13, caractérisé en ce qu'il comprend un volume (20) de matière plastique formé par surmoulage de l'extrémité nervurée (22) du câble (2), de la tête (19) et d'une douille (14) de fixation du capteur.

**Patentansprüche**

1. Induktiver Meßwertaufnehmer mit einem Permanentmagneten (11), der mit mindestens einem Polstück (12, 13) verbunden ist, und einer elektrischen Wicklung (1), die zumindest teilweise die Permanentmagnet-Polstück-Anordnung umgibt, Verbindungsmitteln (3) zum Verbinden der Klemmen der Wicklung mit einem äußeren Kreis, der zwischen diesen Klemmen auftretende elektrische Signale benutzt, und Schutzmitteln zum Schützen der elektrischen Bauelemente des Meßwertaufnehmers, dadurch gekennzeichnet, daß die Schutzmittel ein topfförmiges Teil (4) mit einer inneren (5) und einer äußeren (7) zylindrischen, zueinander koaxialen Wand, aufweisen, daß die Wände eine ringförmige zylindrische Kammer (8) zur Aufnahme der elektrischen Wicklung (1) begrenzen, daß die Kammer an einem ersten Ende des topfförmigen Teiles durch eine ringförmige Wand (10), die mit beiden zylindrischen Wänden einstückig ausgebildet ist, abgedichtet verschlossen ist, daß die innere zylindrische Wand ferner eine von der ringförmigen Kammer (6) umgebene zentrale zylindrische Kammer (6) zur Aufnahme des Permanentmagneten (11) und des Polstückes (12, 13) begrenzt, und daß diese zentrale Kammer am zweiten Ende des topfförmigen Teils durch eine kreisförmige Wand (9), die mit der inneren zylindrischen Wand einstückig ausgebildet ist, abgedichtet verschlossen ist.

2. Meßwertaufnehmer nach Anspruch 1, dadurch gekennzeichnet, daß das zweite Ende des topfförmigen Teils an der Außenwand (7) der ringförmigen Kammer mindestens eine kontinuierliche radiale Rippe (18) trägt, die rings um das Ende des topfförmigen Teiles verläuft, wobei diese radiale Rippe mit einem dichtenden und mechanisch schützenden Material umgossen ist, in das derjenige Teil des Meßwertaufnehmers eingebettet ist, der über das topfförmige Teil hinaus bis zu einem Ende eines einen Teil der Verbindungsmittel bildenden elektrischen Kabels (2) vorsteht.

3. Meßwertaufnehmer nach Anspruch 1 oder 2, dadurch gekennzeichnet, daß der Querschnitt der zentralen Kammer komplementär zu dem der Magnet-Polstück-Anordnung ausgebildet ist, um eine vorgegebene festgelegte Ausrichtung dieser Anordnung bezüglich der Achse dieser Kammer zu definieren.

4. Meßwertaufnehmer nach einem der Ansprüche 1 bis 3, dadurch gekennzeichnet, daß das topfförmige Teil (4) durch Angießen an der Magnet-Polstück-Anordnung um mindestens einen Teil dieser Anordnung herum hergestellt ist.

5. Meßwertaufnehmer nach einem der vorhergehenden Ansprüche, dadurch gekennzeichnet, daß die Wicklung (1) auf einem Rahmen (15) gebildet ist, der so geformt ist, daß er in die ringförmige Kammer über eine ringförmige Öffnung an dem verschlossenen Ende der zentralen Kammer gleitend eingeschoben werden kann.

6. Meßwertaufnehmer nach einem der Ansprüche 1 bis 5, dadurch gekennzeichnet, daß die zentrale Kammer an der Außenseite offen ist, wobei die Magnet-Polstück-Anordnung über diese zentrale Kammer hinaus vorsteht.

7. Meßwertaufnehmer nach einem der Ansprüche 1 bis 6, dadurch gekennzeichnet, daß der Magnet (11) und das Polstück (12, 13) in der zentralen Kammer Ende gegen Ende miteinander verbunden sind.

8. Meßwertaufnehmer nach einem der Ansprüche 1 bis 6, dadurch gekennzeichnet, daß der Magnet und das Polstück in der zentralen Kammer längsverlaufend miteinander verbunden sind.

9. Meßwertaufnehmer nach einem der Ansprüche 1 bis 6, dadurch gekennzeichnet, daß er zwei parallele Polstücke (12, 13) aufweist, die längsverlaufend mit einem Magneten (11) auf dessen beiden Seiten verbunden sind.

10. Meßwertaufnehmer nach einem der Ansprüche 5 bis 9, dadurch gekennzeichnet, daß der die Wicklung tragende Rahmen (15) eine Sperre (19) aufweist, die den querschnitt der ringförmigen Kammer ergänzt, um zu verhindern, daß Dichtungsmaterial, das auf den über das topfförmige Teil hinausstehenden Abschnitt des Meßwertaufnehmers aufgegossen wird, zur Wicklung (1) fließt.

11. Meßwertaufnehmer nach Anspruch 10, dadurch gekennzeichnet, daß die Sperre mindestens einen O-Ring aufweist, der zwischen die Innenseite der Außenwand (7) des topfförmigen Teils (4) und den Rahmen (15) eingesetzt ist.

12. Meßwertaufnehmer nach Anspruch 10, dadurch gekennzeichnet, daß die Sperre einen Kopf (19) aufweist, der mit dem Ende des Kabels (2) und mit den Verbindungen dieses Kabels mit der Wicklung (1) vergossen ist.

13. Meßwertaufnehmer nach Anspruch 12, dadurch gekennzeichnet, daß der Kopf (19) eine abdichtende Verrippung (21) aufweist, die an der Innenseite der Außenwand (7) des topfförmigen Teils (4) anliegt.

14. Meßwertaufnehmer nach Anspruch 12 oder 13, dadurch gekennzeichnet, daß er eine Masse (20) aus Kunststoff, die durch Vergießen mit dem gerippten Ende (22) des Kabels (2) und dem Kopf (19) hergestellt ist, sowie eine Hülse (14) für die Befestigung des Meßwertaufnehmers aufweist.

FIG 1

FIG 2

FIG 3